# EUROPEAN PATENT SPECIFICATION

(11) **EP 4 408 685 B1**
(45) Date of publication and mention of the grant of the patent: **16.09.2026**
(21) Application number: 21786131.9
(22) Date of filing: 28.09.2021
(51) Int. Cl.: B60H 1/00, B60H 1/22, H05K 7/20

(54) **VEHICLE, CHASSIS FOR A VEHICLE AND MANUFACTURING METHOD FOR A VEHICLE**
FAHRZEUG, FAHRWERK FÜR EIN FAHRZEUG UND HERSTELLUNGSVERFAHREN FÜR EIN FAHRZEUG
VÉHICULE, CHÂSSIS POUR VÉHICULE ET PROCÉDÉ DE FABRICATION D'UN VÉHICULE

(43) Date of publication of application: 07.08.2024
(73) Proprietor: VOLKSWAGEN AKTIENGESELLSCHAFT, 38440 Wolfsburg (DE)
(72) Inventor: AAL, Andreas, 38104 Braunschweig (DE)
(86) International application number: PCT/EP2021/076626
(87) International publication number: WO 2023/051892

(56) References cited:
- DE-A1- 102011 005 733
- DE-A1- 19 804 698
- US-A- 5 669 813
- US-A1- 2006 016 588
- US-A1- 2021 161 033
- US-B2- 9 855 816

## Description

The present invention relates to a vehicle, a chassis for a vehicle and a manufacturing method for a vehicle,
Compute or control units in vehicles are very common. The more complex and automated vehicles become the higher the need for electronic components, e.g. providing processing capacity, communication, security applications, driver assistance, etc. In the prior art multiple integration concepts are known for electronic components in vehicles. For example, to avoid a large number of different components some manufacturers integrate components on common substrates/modules (printed circuit boards, PCBs), which lowers the number of separate electronic components in a vehicle. At the same time these modules become more complex. Their mounting, cooling and mechanical decoupling in the vehicular environment (mechanical stress, wide temperature range, etc.) becomes more challenging.

One aspect behind vehicular development is the definition and generation of universal vehicle platforms. For example, architecture concepts for a central compute unit for vehicles are under development. In order to create synergy and cost efficiency, it might be favorable to not only standardize electronic modules and software that can equally be used amongst various vehicles and vehicle classes, but also to standardize manufacturing flows and chassis constructions elements.

A benchmark for a central compute unit may be a centralized unit that comprises the majority or even all of a vehicle's processing capacity. However, there might still be drawbacks with respect to replacement of electronics, hardware upgrades for certain functionalities, etc.

If an integration level is high, a complete exchange of the central compute unit may result upon component upgrade or component failure. US 2006/016 588 A1 discloses a vehicle chassis of a known type, with a first mounting structure for a central compute unit and a second mounting structure for a climate control system.

There is a demand for an improved concept for a central compute unit architecture in a vehicle. This demand is addressed by the subject matter of the independent claims. This demand is solved by a chassis according to claim 1, a vehicle according to claim 13 and a manufacturing method according to claim 14.

Embodiments are based on the finding that a cooling concept for a central compute unit (CCU) of a vehicle can be improved if the central compute unit is mounted next to a climate control system. A thermal coupling between the climate control system and the central compute unit, or of the vehicle's cooling circuit and the central compute unit, can then be efficiently achieved. Embodiments may enable a construction architecture of a vehicle central compute unit that provides implementation solutions to challenges around complexity management, scalability, upgradeability, easy exchangeability, optimized power and thermal management, electromagnetic interference (EMI) issue avoidance/reduction and especially safety/reliability enablement for current and future leading-edge electronics.

Embodiments provide a chassis for a vehicle. The chassis comprises a first mounting structure for a central compute unit, and a second mounting structure for a climate control system next to the first mounting structure for the central compute unit. Embodiments may enable an efficient thermal coupling between a central compute unit and a climate control system of a vehicle.

In further embodiments the chassis may further comprise the central compute unit mounted into the first mounting structure and the climate control system mounted into the second mounting structure. The central control unit may be thermally coupled to the climate control system. Embodiments may enable provision of a chassis with a central compute unit and a climate control system, which are thermally coupled.

For example, the first mounting structure is located below the second mounting structure. Therewith, efficient thermal coupling and accessibility may be achieved.

The first and second mounting structures may be (located) in the middle between the left and right sides of the chassis. Locating these units in the middle or center of the vehicle may further help protecting the central compute unit from impacts evoked by accidents of the vehicle.

The first and second mounting structures may be located beside each other. This may enable efficient thermal coupling and accessibility for maintenance and upgrade. For example, the first mounting structure is located next to a glove box mounting area of the chassis. The first mounting structure may then be easily accessed from a passenger side in the vehicle.

In further embodiments the first mounting structure may be configured to direct a cooling inlet and/or outlet of the central compute unit towards the second mounting structure. This may keep any pipe or tube connection short and efficient. Additionally or alternatively, the first mounting structure may be configured to direct a cooling inlet and/or outlet of the central compute unit towards a driving direction of the vehicle. This may enable an efficient thermal coupling from the front of the vehicle, e.g. from an engine or front compartment.

Furthermore, the first mounting structure may be configured to provide shock damping for the central control unit in some embodiments. Shock damping for the central control unit and the electronic components mounted therein may provide reduced mechanical stress, increased stability and/or endurance for the electronic components in the automotive environment.

According to the invention, the first mounting structure is accessible from the front passenger side of the vehicle. Embodiments may enable efficient or easy access for maintenance, upgrade, and/or replacement.

In embodiments the central compute unit and the climate control system may be configured to be thermally coupled using an air stream. Using an air stream for cooling may be beneficial in terms of leakage next to electronic components. Additionally or alternatively, the central compute unit and the climate control system may be configured to be thermally coupled using a liquid coolant. This may be beneficial with respect to cooling performance, as a cooling liquid has a higher heat capacity than air.

For example, the central compute unit comprises a plurality of exchangeable electronic modules. That way, component maintenance, upgrade or replacement can be efficiently organized. The central compute unit may comprise a cooling plate, which is thermally coupled to the plurality of electronic modules. The cooling plate may then be efficiently couple to the climate control system as outlined herein.

Another embodiment is a vehicle comprising the chassis as described herein.

Yet another embodiment is a manufacturing method for a vehicle based on a chassis as described herein. The method comprises mounting a climate control system into the second mounting structure of the chassis and mounting a central compute unit into the first mounting structure of the chassis. The method further comprises thermally coupling the climate control system and the central compute unit.

Some other features or aspects will be described using the following non-limiting embodiments of apparatuses or methods or computer programs or computer program products by way of example only, and with reference to the accompanying figures, in which:
Fig. 1 illustrates an embodiment of a chassis for a vehicle and an embodiment of a vehicle;
Fig. 2 illustrates an example of a mounting position for a central compute unit in a chassis and a mounting position for a climate control system in the chassis in an embodiment;
Fig. 3 illustrates an example of a mounting position for a central compute unit with multiple electronic modules in a chassis in an embodiment;
Fig. 4 illustrates another example of a mounting position for a central compute unit in a chassis and a mounting position for a climate control system in the chassis in an embodiment;
Fig. 5 illustrates yet another example of a mounting position for a central compute unit in a chassis in an embodiment;
Fig. 6 illustrates an example of a mounting position for a central compute unit in a chassis next to a glove compartment in an embodiment; and
Fig. 7 shows a block diagram of an embodiment of a manufacturing method.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

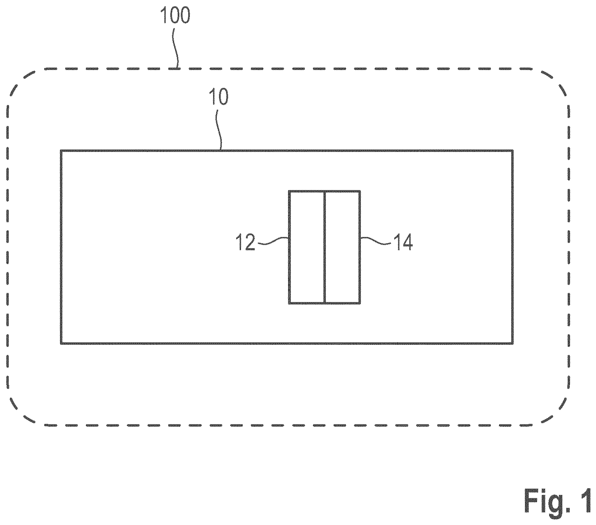

Fig. 1 illustrates an embodiment of a chassis 10 for a vehicle and an embodiment of a vehicle 100. The chassis 10 for the vehicle 100 comprises a first mounting structure 12 for a central compute unit and a second mounting structure 14 for a climate control system next to the first mounting structure 12 for the central compute unit. The arrangement of the two mounting structures 12 and 14 next to each other enables an efficient coupling of the central compute unit and the climate control system. A vehicle 100 with an embodiment of the chassis 10 is another embodiment.

A further embodiment is a chassis 10 for a vehicle, which further comprises the central compute unit mounted into the first mounting structure 12 and the climate control system mounted into the second mounting structure 14. The central control unit is thermally coupled to the climate control system.

In embodiments the chassis 10 can be any structure, platform, or basis to build the vehicle 100 on. The chassis 10 maybe the load-bearing framework of the vehicle 100, which structurally supports the vehicle in its construction and function. An example of a chassis is a vehicle frame, the underpart of a motor (combustion or electric) vehicle, on which the body is mounted. The chassis 10 may be without bodywork of the vehicle and may be assembled with its powertrain (engine and/or drivetrain).

The central compute unit may comprise central processing components of the vehicle and it may comprise one or more electronic modules in accordance with a functional subdivision of the processing in the vehicles (e.g. there may be a power module, an operating system module, a communication module, a graphics processing module, a sensor data processing module, etc.). The central compute unit may be coupled to a cooling medium, e.g. air or a liquid cooling medium. The first mounting structure 12 for the central compute unit may comprise a cooling structure, e.g. a cooling plate with one or more mounting surfaces for electronic modules to couple or integrate the electronic modules into a cooling circuit. The first mounting structure 12 may hence be part of a central control unit, e.g. as structural support and thermal interface for the central compute unit.

The climate control system may be the unit that controls the components of the climate system, e.g. compressor, coolant circuit, valves, temperature of in-cabin air-stream etc. The climate control system may be coupled to a cooling circuit of the vehicle, e.g. it may be coupled to a cooling medium of the vehicle. The second mounting structure may be part of the climate control system, e.g. as structural support and thermal interface.

Embodiments may provide a standard for vehicular chassis and mounting of central compute units and/or climate control systems. Some embodiments may use improved or optimized embedding/placement of a central compute unit into a vehicle chassis 10 for cost-effective replacement electronics integration. For example, embodiments may provide mounting for chassis for vehicles using combustion engines and/or for electric vehicles, hybrids respectively. In order to create synergy and cost efficiency, it would be favorable to not only standardize electronic modules and software that can equally be used amongst vehicles and vehicle classes, but also to standardize manufacturing flows and chassis constructions elements. Embodiments may focus on the standardization of the chassis integration for central compute units.

The following embodiments illustrate chassis integration options for electrical vehicles and combustion engine vehicles, which may be different due to the different traction related space requirements. However, standardization of such integration locations and corresponding chassis adjustments might create a lot of equal tools, parts and equal processes in manufacturing lines. This in turn may result in cost reduction, throughput increase due to simplification, and increased flexibility between manufacturing lines.

For example, a location for the central computer may be in the middle of the chassis below the climate control system for improved/optimal and short connection to a liquid coolant or cold air. Hence, the first mounting structure 12 may be located below the second mounting structure 14.

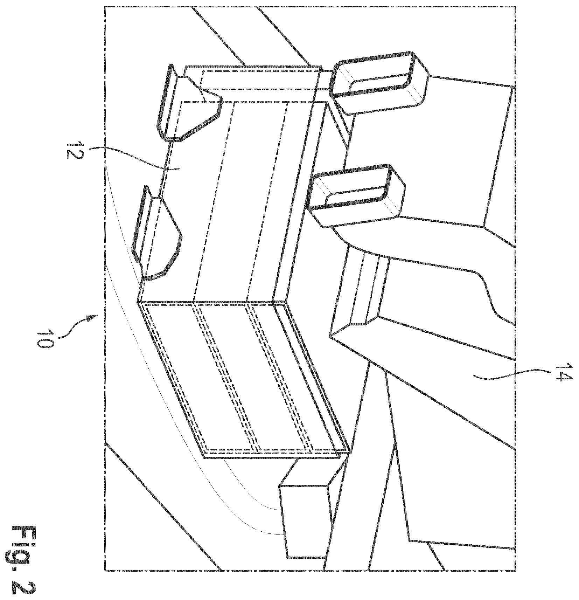

Fig. 2 illustrates an example of a mounting position for a central compute unit in a chassis 10 and a mounting position for a climate control system in the chassis 10 in an embodiment. Fig. 2 shows the first mounting structure 12 as a rack-like structure for the central compute unit. On top of the first mounting structure 12 there is a second mounting structure 14 with climate control system. This configuration may be beneficial if the vehicle's architecture leaves enough room under the climate control system, e.g. electric vehicles.

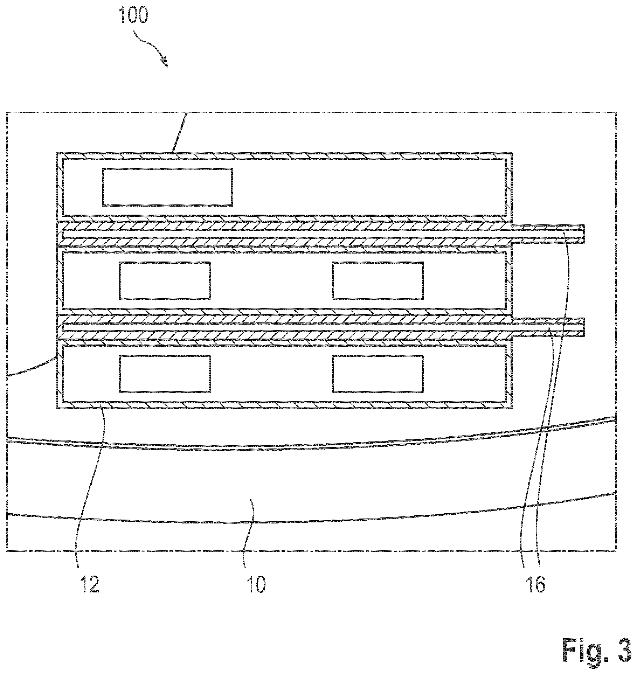

Fig. 3 illustrates an example of a mounting position for a central compute unit with multiple electronic modules in a chassis 10 in an embodiment from a side perspective. In this embodiment the first mounting structure 12 has two cooling plates providing three decks for electronic modules of different sizes. In general, the central compute unit, its mounting structure 12, respectively, may comprise one or more cooling plates, which are thermally coupled to the electronic modules. The central compute unit may comprise a plurality of exchangeable electronic modules.

As can be further seen from Fig. 3 the first mounting structure 12 is configured to direct a cooling inlet and/or outlet 16 of the central compute unit towards a driving direction of the vehicle 100. With the in- and outlets 16 directed to the front of the vehicle the central compute unit can be efficiently coupled to a cooling circuit of the vehicle. In embodiments a coolant inlet/outlet may hence be directed towards the driving direction - towards sealed area of the vehicle. In case of leakage the leak is the directed away from the cabin. Embodiments may be adapted to right "and" left steering vehicle variants.

Furthermore, the first mounting structure 12 may be configured to provide shock damping for the central control unit 12a in some embodiments. Shock damping or shock absorption/reduction may be achieved by using damping or shock-absorbing material for mounting of the first mounting structure 12 in the chassis 10. Additionally or alternatively, damping or shock-absorbing material may be used for mounting the first mounting structure 12 to the second mounting structure 14 and/or for mounting the central unit 12a into the first mounting structure 12. Shocks or mechanical stress, which are/is experienced by the chassis 10, can then be reduced or damped before reaching the central control unit 12a. For example, damping or shock absorbing material is applied when mounting the central control unit 12a into the first mounting structure 12. Damping may be achieved for mechanical vibrations or shocks traversing from the first mounting structure 12 to the central unit 12a. Another option is to use damping or shock-absorbing material between the first mounting structure 12 and the chassis 10, particularly, when the first mounting structure 12 is directly mounted to the chassis 10. Another option is to mount the first mounting structure 12 to the second mounting structure 14, which is then mounted to the chassis 10. The first mounting structure 12 is then mounted to the chassis 10 indirectly via the second mounting structure 14. Yet another option is to use both, the mounting structures 12 and 14 are mounted to each other and each is mounted to the chassis 10. Wherever these components are mounted to each other, damping or shock-absorbing material may be used at one or more of the mounting surfaces/interfaces. For example, such material may use sponge rubber, foam, any flexible intermediate layer, etc.

As shown in Fig. 2 the first and second mounting structures 12, 14 are located in the middle between the left and right sides of the chassis 10. This location is central and may therefore constitute a crash safe location. Moreover, this location may be an easy service access point, because it may easily be accessible via the front passenger side. This may be necessary in some embodiments to be able to quickly exchange modules. Service access points for hardware exchange may become necessary especially because cyber security is hardware bound and this hardware may have software update limits.

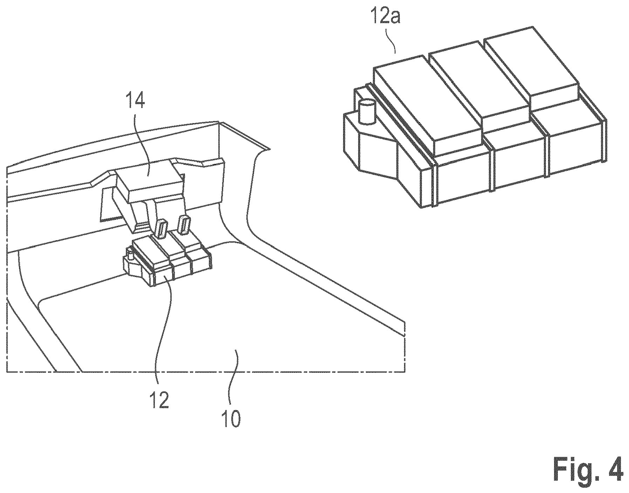

Fig. 4 illustrates another example of a mounting position for a central compute unit in a chassis 10 and a mounting position for a climate control system in the chassis 10 in an embodiment. Fig. 4 illustrates a first mounting structure 12 with a central compute unit 12a mounted underneath a second mounting structure 14. The first mounting structure 12 is located at a central vehicle service access point.

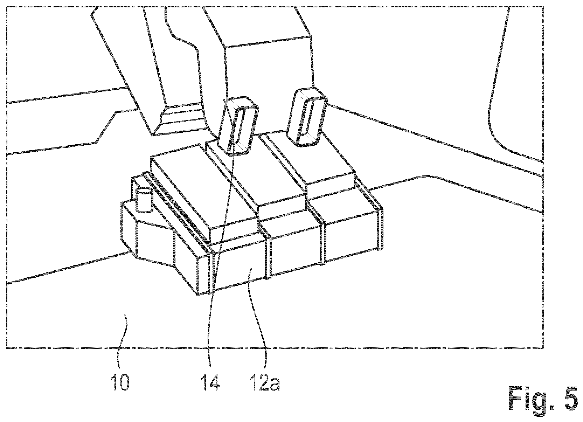

Fig. 5 illustrates yet another example of a mounting position for a central compute unit in a chassis 10 in an embodiment. Fig. 5 shows the mounting position of a central compute unit 12a given by the first mounting structure 12 in the middle of the chassis 10 under the climate control system with three electronic modules.

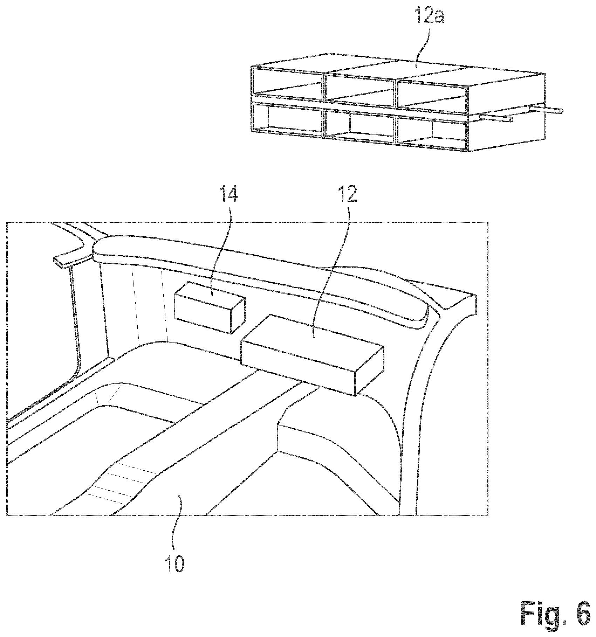

Another variant with similar features is shown in Fig. 6. Fig. 6 illustrates an example of a mounting position for a central compute unit 12a given by the first mounting structure 12 in a chassis 10 next to a glove compartment in an embodiment. The first and second mounting structures 12, 14 are located beside each other and the first mounting structure 12 is located next to a glove box mounting area of the chassis 10. The first mounting structure 12 may be configured to direct a cooling inlet and/or outlet of the central compute unit towards the second mounting structure 14 for efficient thermal coupling. The first mounting structure 12 in this embodiment is also accessible from the front passenger side of the vehicle.

For example, for a combustion engine variant, which might not provide enough room underneath the climate control unit the option shown in Fig. 6 may be used. The central compute unit maybe located to the left or the right in the area of the glove box beside the climate control system for improved/optimal and short connection to a liquid coolant or cold air. This location may also be relatively crash safe and may serve as easy service access point from the front passenger side or glove box. Such location and access may enable a quick exchange of modules. Service access points for hardware exchange may become necessary especially because cyber security is hardware bound and the hardware has software limits. For example, coolant inlets/outlets may be directed towards to the left or right towards the climate control system. Embodiments are usable for right "and" left steering vehicle variants.

In embodiments the central compute unit and the climate control system may be configured to be thermally coupled using an air stream. For example, an air stream generated an controlled by the climate control system can be used as cooling medium for the central compute unit. For example, the climate control system may control the temperature at certain points in the central compute unit. The central compute unit and the climate control system may as well be configured to be thermally coupled using a liquid coolant. For example, they may be coupled to the same cooling circuit of the vehicle or they may share the cooling fluid used for air conditioning.

For example, the mounting structure 12 for the central compute unit may follow a predefined standard or form factor.

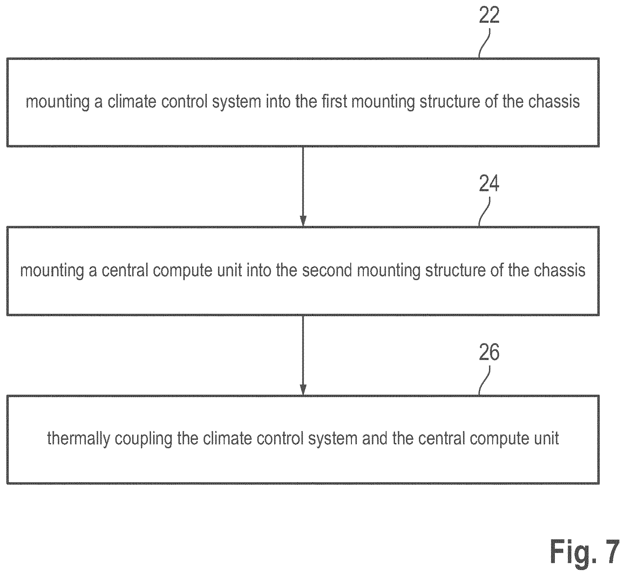

Fig. 7 shows a block diagram of an embodiment of a manufacturing method 20 for a vehicle based on a chassis 10 as described herein. The method 20 comprises mounting 22 a climate control system into the second mounting structure of the chassis and mounting 24 a central compute unit into the first mounting structure of the chassis. The method 20 further comprises thermally coupling 26 the climate control system and the central compute unit.

A vehicle may be understood as a device for transporting persons and/or goods, such as passenger vehicles, trucks, busses, trains, ships, drones, aircrafts, space crafts and the like. Embodiments may be installed in a vehicle of the automotive industry, especially to a car, a bus or a truck, but not limited to these applications.

A vehicle central compute unit (vehicle CCU) may be understood as a device used for computing data and/or information regarding a vehicle. The vehicle CCU may be installed on-board of the vehicle. Parts of the vehicle CCU may be located or at least be interactive with a compute device off-board, such as a cloud computing system or a computing entity. Moreover, the vehicle CCU may be portable and exchangeable. Thus, the vehicle CCU or its modules may be replaced in the vehicle during maintenance of the computing system.

Embodiments may provide a solution for a centralized compute unit. The suggested construction and integration of such a unit may replace a plurality of single control units in a vehicle. Embodiments may be implemented in high integrated electronic systems, which may be related to security sensitive applications. Embodiments may be applicable for applications of high life-span products which may have a high environmental impact. These applications may be found in automotive industry, in aircraft and space industry as well as ship and train vehicles.

Moreover, embodiments relate to the construction architecture of a vehicle CCU that provides implementation solutions to challenges around complexity management, scalability, upgradeability, easy exchangeability, optimized power and thermal management, EMI issue avoidance/reduction and especially safety/reliability enablement for current and future leading-edge electronics.

While above several exemplary embodiments of the present invention have been described, it has to be noted that a great number of variations thereto exists. Furthermore, it is appreciated that the described exemplary embodiments only illustrate non-limiting examples of how the present invention can be implemented and that it is not intended to limit the scope, the application or the configuration of the herein-described apparatuses and methods, the scope of the invention being defined by the claims. Rather, the preceding description will provide the person skilled in the art with constructions for implementing at least one exemplary embodiment of the invention, wherein it has to be understood that various changes of functionality and the arrangement of the elements of the exemplary embodiment can be made, without deviating from the subject-matter defined by the appended claims.

Moreover, embodiments may be relevant for certain standards that apply or at least have influence on vehicle implementations. For example, embodiments may conform to the standards set by the Joint Electron Device Engineering Council (JEDEC), by the International Electrotechnical Commission (IEC), by the Institute of Electrical and Electronics Engineers (IEEE), by the Japan Electronics and Information Technology Industries Association (JEITA), by the Institute of Printed Circuits (IPC), the German Association of the Automotive Industry (VDA), etc.

The description and drawings merely illustrate the principles of the invention. It will thus be appreciated that those skilled in the art will be able to devise various arrangements that, although not explicitly described or shown herein, embody the principles of the invention and are included within its scope, as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### Reference list:

- 10: chassis
- 12: first mounting structure
- 12a: central compute unit
- 14: second mounting structure
- 16: inlet and/or outlet
- 20: manufacturing method
- 22: mounting a climate control system into the first mounting structure of the chassis
- 24: mounting a central compute unit into the second mounting structure of the chassis
- 26: thermally coupling the climate control system and the central compute unit
- 100: vehicle

## Claims

1. A chassis (10) for a vehicle (100), comprising
a first mounting structure (12) for a central compute unit (12a); and
a second mounting structure (14) for a climate control system next to the first mounting structure (12) for the central compute unit (12a),
**characterized in, that**
the first mounting structure (12) is accessible from the front passenger side of the vehicle (100).

2. The chassis (10) of claim 1, further comprising the central compute unit (12a) mounted into the first mounting structure (12) and the climate control system mounted into the second mounting structure (14), wherein the central control unit (12a) is thermally coupled to the climate control system.

3. The chassis (10) of one of the claims 1 or 2, wherein the first mounting structure (12) is located below the second mounting structure (14).

4. The chassis (10) of one of the claims 1 to 3, wherein the first and second mounting structures (12; 14) are located in the middle between the left and right sides of the chassis (10).

5. The chassis (10) of one of the claims 1 or 2, wherein the first and second mounting structures (12; 14) are located beside each other.

6. The chassis (10) of claim 5, wherein the first mounting structure (12) is located next to a glove box mounting area of the chassis (10).

7. The chassis (10) of one of the claims 1 to 6, wherein the first mounting structure (12) is configured to direct a cooling inlet and/or outlet (16) of the central compute unit (12a) towards the second mounting structure (14) and/or towards a driving direction of the vehicle (100).

8. The chassis (10) of one of the claims 1 to 7, wherein the first mounting structure (12) is configured to provide shock damping for the central control unit (12a).

9. The chassis (10) of one of the claims 2 to 8, wherein the central compute unit (12a) and the climate control system are configured to be thermally coupled using an air stream.

10. The chassis (10) of one of the claims 2 to 9, wherein the central compute unit (12a) and the climate control system are configured to be thermally coupled using a liquid coolant.

11. The chassis (10) of one of the claims 2 to 10, wherein the central compute unit (12a) comprises a plurality of exchangeable electronic modules.

12. The chassis (10) of claim 11, wherein the central compute unit (12a) comprises a cooling plate, which is thermally coupled to the plurality of electronic modules.

13. A vehicle (100) comprising the chassis (10) of one of the claims 1 to 12.

14. A manufacturing method (20) for a vehicle (100) based on a chassis (10) according to claim 1, comprising
mounting (22) a climate control system into the second mounting structure (14) of the chassis (10);
mounting (24) a central compute unit (12a) into the first mounting structure (12) of the chassis (10); and
thermally coupling (26) the climate control system and the central compute unit (12a).

## Patentansprüche

1. Chassis (10) für ein Fahrzeug (100), umfassend
eine erste Montagestruktur (12) für eine zentrale Recheneinheit (12a); und
eine zweite Montagestruktur (14) für ein Klimasteuersystem neben der ersten Montagestruktur (12) für die zentrale Recheneinheit (12a),
**dadurch gekennzeichnet, dass**
die erste Montagestruktur (12) von der Beifahrerseite des Fahrzeugs (100) aus zugänglich ist.

2. Chassis (10) nach Anspruch 1, ferner umfassend die in die erste Montagestruktur (12) montierte zentrale Recheneinheit (12a) und das in die zweite Montagestruktur (14) montierte Klimasteuersystem, wobei die zentrale Steuereinheit (12a) thermisch an das Klimasteuersystem gekoppelt ist.

3. Chassis (10) nach einem der Ansprüche 1 oder 2, wobei die erste Montagestruktur (12) unter der zweiten Montagestruktur (14) angeordnet ist.

4. Chassis (10) nach einem der Ansprüche 1 bis 3, wobei die erste und die zweite Montagestruktur (12; 14) in der Mitte zwischen der linken und der rechten Seite des Chassis (10) angeordnet sind.

5. Chassis (10) nach einem der Ansprüche 1 oder 2, wobei die erste und die zweite Montagestruktur (12; 14) nebeneinander angeordnet sind.

6. Chassis (10) nach Anspruch 5, wobei die erste Montagestruktur (12) neben einem Handschuhfach-Montagebereich des Chassis (10) angeordnet ist.

7. Chassis (10) nach einem der Ansprüche 1 bis 6, wobei die erste Montagestruktur (12) konfiguriert ist, um einen Kühleinlass und/oder -auslass (16) der zentralen Recheneinheit (12a) zu der zweiten Montagestruktur (14) hin und/oder zu einer Fahrtrichtung des Fahrzeugs (100) hin auszurichten.

8. Chassis (10) nach einem der Ansprüche 1 bis 7, wobei die erste Montagestruktur (12) konfiguriert ist, um eine Stoßdämpfung für die zentrale Steuereinheit (12a) bereitzustellen.

9. Chassis (10) nach einem der Ansprüche 2 bis 8, wobei die zentrale Recheneinheit (12a) und das Klimasteuersystem konfiguriert sind, um unter Verwendung eines Luftstroms thermisch gekoppelt zu werden.

10. Chassis (10) nach einem der Ansprüche 2 bis 9, wobei die zentrale Recheneinheit (12a) und das Klimasteuersystem konfiguriert sind, um unter Verwendung eines flüssigen Kühlmittels thermisch gekoppelt zu werden.

11. Chassis (10) nach einem der Ansprüche 2 bis 10, wobei die zentrale Recheneinheit (12a) eine Vielzahl von austauschbaren elektronischen Modulen umfasst.

12. Chassis (10) nach Anspruch 11, wobei die zentrale Recheneinheit (12a) eine Kühlplatte umfasst, die thermisch an die Vielzahl von elektronischen Modulen gekoppelt ist.

13. Fahrzeug (100), umfassend das Chassis (10) nach einem der Ansprüche 1 bis 12.

14. Herstellungsverfahren (20) für ein Fahrzeug (100) basierend auf einem Chassis (10) nach Anspruch 1, umfassend
Montieren (22) eines Klimasteuersystems in die zweite Montagestruktur (14) des Chassis (10);
Montieren (24) einer zentralen Recheneinheit (12a) in die erste Montagestruktur (12) des Chassis (10); und
thermisches Koppeln (26) des Klimasteuersystems und der zentralen Recheneinheit (12a).

## Revendications

1. Châssis (10) pour un véhicule (100), comprenant
une première structure de montage (12) pour une unité centrale de calcul (12a) ; et
une seconde structure de montage (14) pour un système de commande de climatisation à côté de la première structure de montage (12) pour l'unité de calcul centrale (12a),
**caractérisé en ce que**
la première structure de montage (12) est accessible depuis le côté passager avant du véhicule (100).

2. Châssis (10) selon la revendication 1, comprenant en outre l'unité de calcul centrale (12a) montée dans la première structure de montage (12) et le système de commande de climatisation monté dans la seconde structure de montage (14), dans lequel l'unité de commande centrale (12a) est couplée thermiquement au système de commande de climatisation.

3. Châssis (10) selon l'une des revendications 1 ou 2, dans lequel la première structure de montage (12) est située en dessous de la seconde structure de montage (14).

4. Châssis (10) selon l'une des revendications 1 à 3, dans lequel les première et seconde structures de montage (12 ; 14) sont situées au milieu entre les côtés gauche et droit du châssis (10).

5. Châssis (10) selon l'une des revendications 1 ou 2, dans lequel les première et seconde structures de montage (12 ; 14) sont situées l'une à côté de l'autre.

6. Châssis (10) selon la revendication 5, dans lequel la première structure de montage (12) est localisée à côté d'une zone de montage de boîte à gants du châssis (10).

7. Châssis (10) selon l'une des revendications 1 à 6, dans lequel la première structure de montage (12) est conçue pour diriger une entrée de refroidissement et/ou une sortie (16) de l'unité de calcul centrale (12a) vers la seconde structure de montage (14) et/ou vers une direction de conduite du véhicule (100).

8. Châssis (10) selon l'une des revendications 1 à 7, dans lequel la première structure de montage (12) est conçue pour fournir un amortissement de chocs à l'unité de commande centrale (12a).

9. Châssis (10) selon l'une des revendications 2 à 8, dans lequel l'unité centrale de calcul (12a) et le système de commande de climatisation sont configurés pour être couplés thermiquement à l'aide d'un flux d'air.

10. Châssis (10) selon l'une des revendications 2 à 9, dans lequel l'unité de calcul centrale (12a) et le système de commande de climatisation sont configurés pour être couplés thermiquement à l'aide d'un liquide de refroidissement.

11. Châssis (10) selon l'une des revendications 2 à 10, dans lequel l'unité de calcul centrale (12a) comprend une pluralité de modules électroniques échangeables.

12. Châssis (10) selon la revendication 11, dans lequel l'unité de calcul centrale (12a) comprend une plaque de refroidissement, qui est couplée thermiquement à la pluralité de modules électroniques.

13. Véhicule (100) comprenant le châssis (10) selon l'une des revendications 1 à 12.

14. Procédé de fabrication (20) pour un véhicule (100) sur la base d'un châssis (10) selon la revendication 1, comprenant
le montage (22) d'un système de commande de climatisation dans la seconde structure de montage (14) du châssis (10) ;
le montage (24) d'une unité de calcul centrale (12a) dans la première structure de montage (12) du châssis (10) ; et
le couplage thermique (26) du système de commande de climatisation et de l'unité de calcul centrale (12a).
